Europäisches Patentamt

European Patent Office

Office européen des brevets

(19)

(11) Publication number: **0 346 291**
A1

# (12) EUROPEAN PATENT APPLICATION

(21) Application number: 89830197.3

(22) Date of filing: 09.05.89

(51) Int. Cl.⁴: **F 16 L 37/26**

(30) Priority: 10.05.88 IT 5313388

(43) Date of publication of application:
13.12.89 Bulletin 89/50

(84) Designated Contracting States:
AT BE DE ES FR GB IT NL SE

(71) Applicant: INDUSTRIE MAGNETI MARELLI S.r.l.
Via Adriano 81
I-20128 Milano (IT)

(72) Inventor: Fallica, Antonio Giovanni
Via Cilea, 6
I-20096 Pioltello (Milano) (IT)

(74) Representative: Quinterno, Giuseppe et al
c/o Jacobacci-Casetta & Perani S.p.A. Via Alfieri, 17
I-10121 Torino (IT)

(54) **A coupling for connecting the ends of two tubular elements.**

(57) The coupling includes a retaining structure (4) which projects axially from one end (1a) of one of the tubular elements (1) and extends around the opening (3) of that end (1a) through an angle greater than 180° . The structure (4) has at least one internal radial stop projection (6) which defines a retaining seat (7) with the end (1a) of the tubular element (1). An end flange (8) is provided at one end of the other tubular element (2) and can be snap-engaged in the seat (7) by means of a transverse movement for its insertion into the retaining structure (4) of the other tubular element (1).

FIG. 1

EP 0 346 291 A1

**Description**

## A coupling for connecting the ends of two tubular elements

The present invention relates to a coupling for connecting the ends of two tubular elements.

The quick coupling according to the present invention is characterised in that it comprises:
a retaining structure which projects axially from one end of one of the tubular elements and, as a whole, extends around the opening of the end through an angle greater than 180°, the structure having at least one radial stop projection which defines a retaining seat with the end of the tubular element, and
an end flange which is arranged at one end of the other element and can be snap-engaged in the seat by means of a transverse movement for its insertion into the retaining structure of the other tubular element.

Further characteristics and advantages of the coupling according to the invention will become clear from the detailed description which follows with reference to the appended drawings, provided by way of non-limiting example, in which:

Figure 1 is a perspective view of a coupling according to the present invention,

Figure 2 is a section taken on the line II-II of Figure 1,

Figure 3 is an exploded perspective view of the coupling shown in Figure 1, and

Figure 4 shows a clamping ring useable in the coupling according to the invention.

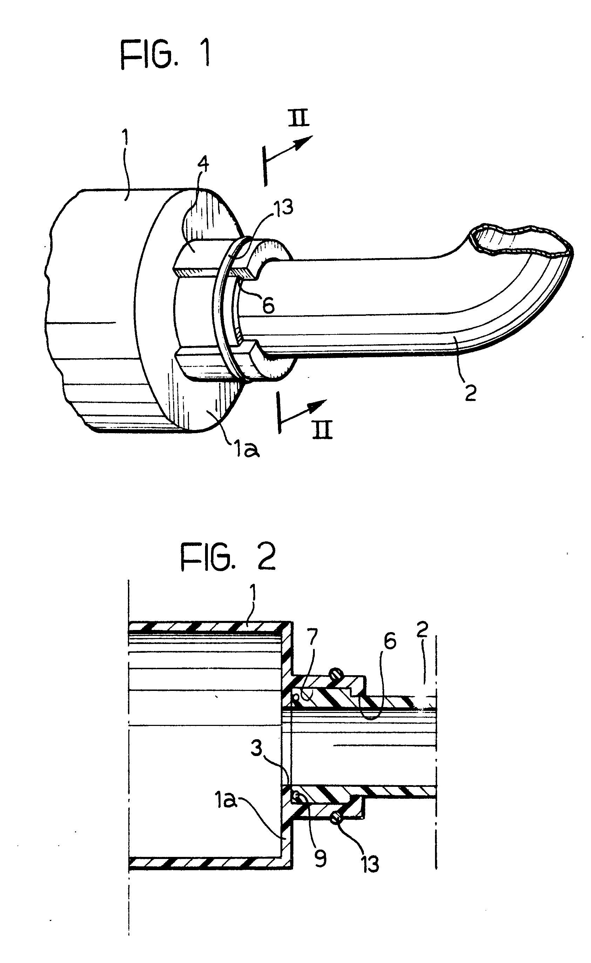

Figures 1 to 3 show a quick coupling according to the present invention for connecting the ends of two tubular elements 1 and 2. In the embodiment illustrated, the tubular element 1 has a larger diameter and has a transverse end wall 1a with a central opening 3.

An arcuate retaining structure 4 projects axially from the outer face of the end wall 1a of the tubular element 1 and extends around the opening 3 through an angle greater than 180°. The structure therefore has a lateral access gap 5 with an angular extent of less than 180°.

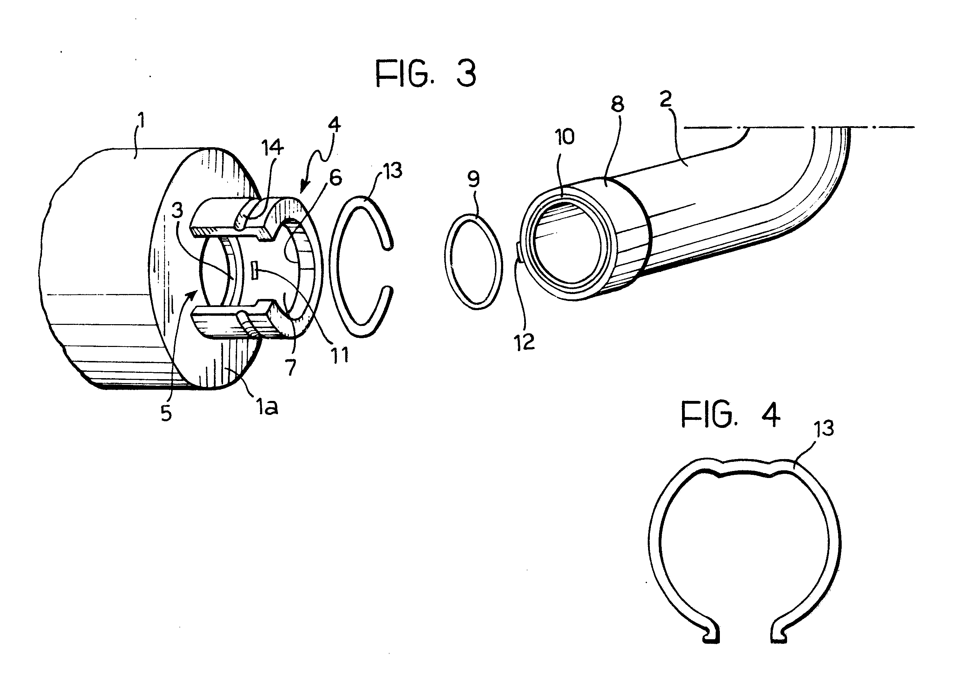

On its inner surface, the retaining structure 4 has a radial projection, indicated 6, which defines a retaining seat 7 with the end wall 1a of the tubular element 1 (Figures 2 and 3).

One end of the tubular element 2 has an end flange 8 which can be snap-engaged in the seat 7 in the retaining structure 4 of the other tubular element by means of a transverse movement for inserting it into the retaining structure through the lateral gap 5. The outer diameter of the flange 8 is substantially equal to or slightly less than the diameter of the seat 7, whilst the outside diameter of the tubular element 2 is smaller than, or at most substantially equal to, the inside diameter of the projection 6 of the tubular element 1.

The end flange 8 of the tubular element 1 can be snap-engaged in the retaining structure 4 of the tubular element 1 as a result of the resilient deformation of the retaining structure 4 and/or the end flange 8 of the tubular element 2.

If desired or necessary, a sealing ring 9 (Figures 2 and 3) may be placed between the facing surfaces. The ring may, for example, be housed in an annular seat 10 formed in the end face of the end flange 8 of the tubular element 2.

The connection achieved by the coupling according to the invention enables the tubular elements to be oriented angularly relative to each other in the desired manner. If required, however, the relative angular position of connection may be fixed, for example, by the provision of a hole 11 in the inner surface of the retaining structure 4 of the tubular element 1 for the engagement of a locking projection 12 on the outside of the end flange 8 of the tubular element 2, as shown in Figure 3.

If required, the connection of the two tubular elements may also be made more secure by the engagement of a split clamping ring in an external groove of the retaining structure 4 of the tubular element 1. In Figure 3, the clamping ring is indicated 13 whilst the groove for housing it is indicated 14.

When assembled, the coupling appears as shown in Figure 1.

Figure 4 shows a variant of the clamping split ring 13.

Naturally, many variants may be considered by experts in the art. For example, instead of being constituted by a single projection extending through more than 180°, the retaining structure could be constituted by a series of tabs arranged along an arc which nevertheless has an overall extent greater than 180°. Moreover any sealing ring could be housed in a seat provided in the tubular element in which the retaining structure described above is formed.

**Claims**

1. A coupling for connecting the ends of two tubular elements (1, 2), characterised in that it comprises:
a retaining structure (4) which projects axially from one end (1a) of one of the tubular elements (1) and extends around the opening (3) of the end (1a) through an angle greater than 180°, the structure (4) having at least one radial stop projection (6) which defines a retaining seat (7) with the end (1a) of the tubular element (1), and
an end flange (8) which is arranged at one end of the other tubular element (2) and can be snap-engaged in the seat by means of a transverse movement for its insertion into the retaining structure (4) of the other tubular element (1).

2. A coupling according to Claim 1, characterised in that a sealing ring (9) is interposed between facing end surfaces of the tubular elements (1, 2).

3. A coupling according to Claim 2, characterised in that an annular seat (10) for housing the annular sealing element (9) is formed in the end face of the end flange (8) of one of the two tubular elements (2).

4. A coupling according to one of the preceding claims, characterised in that means (11, 12) are provided for achieving the relative angular locking of the tubular elements (1, 2).

5. A coupling according to Claim 4, characterised in that the locking means comprise at least one hole (11) formed in the inner surface of the retaining structure (4) for the engagement of a corresponding external radial projection (12) of the end flange (8) of the other tubular element (2).

6. A coupling according to any one of the preceding claims, characterised in that a seat (14) is formed in the outer surface of the retaining structure for housing a clamping element (13) substantially in the form of a split ring.

EP 0 346 291 A1

## FIG. 1

## FIG. 2

# FIG. 3

# FIG. 4

EP 0 346 291 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | FR-A- 728 503 (DUBOIS) <br> * Figures * <br> --- | 1-3 | F 16 L 37/26 |
| X | US-A-1 739 131 (VAN NESS EICK) <br> * Figures; column 2, lines 42-56 * <br> --- | 1-5 | |
| X | FR-A-1 362 459 (VALLOUREC) <br> * Figures * | 1-3 | |
| A | ----- | 6 | |

TECHNICAL FIELDS SEARCHED (Int. Cl.4)

F 16 L

The present search report has been drawn up for all claims

| Place of search | Date of completion of the search | Examiner |
|---|---|---|
| THE HAGUE | 18-08-1989 | HUBEAU M.G. |